# EUROPÄISCHE PATENTSCHRIFT

(11) **EP 3 784 540 B1**
(45) Veröffentlichungstag und Bekanntmachung des Hinweises auf die Patenterteilung: **28.09.2022**
(21) Anmeldenummer: 19716103.7
(22) Anmeldetag: 29.03.2019
(51) Int. Cl.: B60T 15/20, B60T 13/68, B60T 8/32

(54) **STEUERVENTIL, ELEKTRONISCH STEUERBARES BREMSSYSTEM SOWIE VERFAHREN ZUM STEUERN DES ELEKTRONISCH STEUERBAREN BREMSSYSTEMS**
CONTROL VALVE, ELECTRONICALLY CONTROLLABLE BRAKING SYSTEM, AND METHOD FOR CONTROLLING THE ELECTRONICALLY CONTROLLABLE BRAKING SYSTEM
SOUPAPE DE COMMANDE, SYSTÈME DE FREINAGE À COMMANDE ÉLECTRONIQUE ET PROCÉDÉ DE COMMANDE DU SYSTÈME DE FREINAGE À COMMANDE ÉLECTRONIQUE

(30) Priorität: 26.04.2018 DE 102018110088
(43) Veröffentlichungstag der Anmeldung: 03.03.2021
(73) Patentinhaber: ZF CV Systems Europe BV, 1170 Brussels (BE)
(72) Erfinder: BEIER, Peter, 31515 Wunstorf (DE); OTREMBA, Robert, 30952 Ronnenberg (DE); VAN THIEL, Julian, 30938 Grossburgwedel (DE)
(74) Vertreter: Rabe, Dirk-Heinrich
(86) Internationale Anmeldenummer: PCT/EP2019/058046
(87) Internationale Veröffentlichungsnummer: WO 2019/206565

(56) Entgegenhaltungen:
- EP-A2- 0 131 683
- WO-A1-2015/169418
- SU-A1- 610 699

## Beschreibung

Die Erfindung betrifft ein Steuerventil zum Aussteuern eines Federspeicher-Bremsdruckes gemäß dem Oberbegriff des Anspruches 1, sowie ein elektronisch steuerbares Bremssystem mit einem derartigen Steuerventil und ein Verfahren zum Steuern des elektronisch steuerbaren Bremssystems.

Herkömmliche elektronisch steuerbare Bremssysteme weisen den einzelnen Fahrzeugachsen zugeordnete Druckmodulatoren auf, die im Normalbetrieb elektrisch angesteuert werden, um eine bestimmte Betriebsbrems-Bremsvorgabe an den jeweiligen Rädern in einem Betriebsbremskreis umzusetzen. Die elektrische Steuerung erfolgt hierbei von einem Zentralmodul ausgehend, das die jeweiligen Druckmodulatoren über ein Steuersignal entsprechend der Betriebsbrems-Bremsvorgabe ansteuert.

Bei einem elektrischen Ausfall oder Defekt dieser elektrischen Ansteuerung, sind die Druckmodulatoren herkömmlicherweise mit einer pneumatischen Redundanz versehen. Dazu kann von einem Betriebsbremsventil, das die Betriebsbrems-Bremsvorgabe vom Fahrer aufnimmt, ein pneumatischer Steuerdruck an pneumatische Redundanz-Anschlüsse der jeweiligen Druckmodulatoren übertragen werden. Diese sorgen bei einem Ausfall oder einem Defekt bei der elektrisch gesteuerten Umsetzung der Bremsung für eine Luftmengenverstärkung des Steuerdruckes und ein Aussteuern eines Bremsdruckes an die jeweiligen Betriebsbremsen. Dadurch kann eine pneumatische Redundanz ausgebildet werden.

Weiterhin weisen derartige Bremssysteme neben dem Betriebsbremskreis einen Parkbremskreis auf, in dem über ein Parkbremsventil eine Parkbrems-Bremsvorgabe vom Fahrer aufgenommen werden kann. Infolge dessen wird vom Parkbremsventil ein Parkbrems-Steuerdruck an ein Steuerventil ausgegeben und darüber luftmengenverstärkt an Federspeicherteile der Radbremsen, vorzugsweise der Hinterachs-Radbremsen, als Federspeicher-Bremsdruck ausgegeben. Die Federspeicherteile sind bekanntermaßen derartig aufgebaut, dass diese bei geringem Federspeicher-Bremsdruck durch eine Federvorspannung zugespannt und bei einem höheren Federspeicher-Bremsdruck entgegen der Federvorspannung geöffnet werden. Somit kann zumindest an den Hinterrädern eine Bremswirkung über einen Membranteil in Abhängigkeit des vom Hinterachs-Druckmodulator - elektrisch oder pneumatisch redundant - ausgegebenen Membran-Bremsdruckes sowie über den Federspeicherteil in Abhängigkeit des Federspeicher-Bremsdruckes erreicht werden.

Nachteilig hierbei ist, dass zur Ausbildung der pneumatischen Redundanz an der Hinterachse Druckmodulatoren nötig sind, die pneumatisch angesteuert werden können. Diese sind zum einen technisch aufwendig aufgebaut und zum anderen ist ein hoher Aufwand zur Verlegung von Druckleitungen zur Hinterachse zu betreiben, die lediglich für die Redundanz benötigt werden.

Zu einem anderen Thema offenbart EP0131683A2 ein Relaisventil, welches in einer Ausführungsform als ein zweikreisig ansteuerbares Relaisventil mit zwei Kolben dargestellt worden.

Aufgabe der Erfindung ist daher, ein Steuerventil zum Aussteuern eines Federspeicher-Bremsdruckes bereitzustellen, mit dem eine zuverlässige und einfache pneumatische Steuerung eines elektrisch steuerbaren Bremssystems auch im Redundanzfall ermöglicht werden kann. Aufgabe ist weiterhin ein elektrisch steuerbares Bremssystem sowie ein Verfahren zum Steuern dieses Bremssystems bereitzustellen. Die Unteransprüche geben bevorzugte Weiterbildung an.

Diese Aufgabe wird durch ein Steuerventil nach Anspruch 1, ein elektronisch steuerbares Bremssystem nach Anspruch 12 sowie ein Verfahren nach Anspruch 16 gelöst. Die Unteransprüche geben bevorzugte Weiterbildungen an. Erfindungsgemäß ist demnach vorgesehen, ein Steuerventil zum Aussteuern eines Federspeicher-Bremsdruckes an Federspeicherteile einer Hinterachs-Radbremse derartig zu erweitern, dass neben der pneumatischen Ansteuerung über einen von einem Parkbremsventil ausgegebenen Parkbrems-Steuerdruck über einen ersten Steueranschluss auch eine pneumatische Ansteuerung des Steuerventils mit einem vom Betriebsbremsventil ausgegebenen und von einer Betriebsbrems-Bremsvorgabe abhängigen Betriebsbrems-Steuerdruck möglich ist.

Dadurch wird bereits der Vorteil erreicht, dass die Federspeicherteile nicht nur in üblicher Weise in Abhängigkeit einer Parkbrems-Bremsvorgabe betätigt werden können, sondern ergänzend auch in Abhängigkeit einer über ein Betriebsbremsventil vorgegebenen Betriebsbrems-Bremsvorgabe. Das erfindungsgemäße Steuerventil sorgt somit dafür, dass neben dem Parkbrems-Steuerdruck auch der Betriebsbrems-Steuerdruck in einen entsprechenden Federspeicher-Bremsdruck umgesetzt wird, so dass darüber vorteilhafterweise eine redundante Ansteuerung der Hinterachs-Radbremsen - in dem Fall über den Federspeicherteil - stattfinden kann. Demnach kann die redundante pneumatische Ansteuerung eines Hinterachs-Druckmodulators entfallen. Vorteilhafterweise kann der Hinterachs-Druckmodulator dadurch einfacher aufgebaut werden, da nur noch eine elektrische Ansteuerung nötig ist. Für die pneumatische Redundanz an der Hinterachse kann dann auf Bestandteile der Parkbremse bzw. des Parkbremskreises zurückgegriffen werden, die bereits pneumatische Komponenten aufweist und eine pneumatische Ansteuerung ermöglicht.

Somit ist lediglich die Funktion des Steuerventils zu erweitern, was erfindungsgemäß dadurch erfolgt, dass der erste Steueranschluss - insbesondere im Redundanzfall - mit einem verstellbaren ersten Steuerraum im Steuerventil verbindbar ist, wobei der erste Steuerraum derartig mit den im Steuerventil angeordneten Steuermitteln in Wirkverbindung steht, dass der Federspeicher-Bremsdruck am Steuerausgang bei einer Verstellung des ersten Steuerraumes infolge einer Druckbeaufschlagung mit dem Betriebsbrems-Steuerdruck in Abhängigkeit des Betriebsbrems-Steuerdruckes und/oder des Parkbrems-Steuerdruckes einstellbar ist.

Der Betriebsbrems-Steuerdruck wird hierbei entweder durch einen Vorderachs-Betriebsbrems-Steuerdruck oder durch einen Redundanz-Betriebsbrems-Steuerdruck vorgegeben. In der ersten Variante ist das Betriebsbremsventil einkanalig ausgeführt, d.h. in Abhängigkeit der Betriebsbrems-Bremsvorgabe wird ein Vorderachs-Betriebsbrems-Steuerdruck erzeugt und an einen Redundanz-Anschluss eines Vorderachs-Druckmodulators übertragen. Dieser dient der redundanten pneumatischen Ansteuerung des Vorderachs-Druckmodulators bei einem Ausfall dessen elektrischer Ansteuerung. Über eine Abzweigung wird der Vorderachs-Betriebsbrems-Steuerdruck auch dem ersten Steueranschluss des Steuerventils zugeführt, so dass an der Hinterachse ebenfalls redundant eingegriffen werden kann. Dadurch kann das Betriebsbremsventil vorteilhafterweise einfacher und kostengünstiger ausgeführt werden, da lediglich ein Kanal nötig ist.

Alternativ ist in der zweiten Variante vorgesehen, dass das Betriebsbremsventil zweikanalig ausgeführt ist, wobei ein erster Kanal mit dem Redundanz-Anschluss des Vorderachs-Druckmodulators verbunden ist zur pneumatischen Ansteuerung des Vorderachs-Druckmodulators mit dem Vorderachs-Betriebsbrems-Steuerdruckes (wie oben beschrieben) und ein zweiter Kanal mit dem ersten Steueranschluss des Steuerventils verbunden ist zur Übertragung eines im Betriebsbremsventil in Abhängigkeit der Betriebsbrems-Bremsvorgabe im zweiten Kanal erzeugten Redundanz-Steuerdruckes an das Steuerventil. Die Abzweigung kann in diesem Fall entfallen. Dadurch kann vorteilhafterweise eine getrennte zweikanalige Ausführung erreicht werden, so dass die Vorderachse und die Hinterachse im Bedarfsfall unabhängig voneinander pneumatisch redundant gebremst werden können.

Die Steuermittel im Steuerventil sorgen hierbei dafür, dass sich in Abhängigkeit des Parkbrems-Steuerdruckes ein bestimmter Federspeicher-Bremsdruck am Steuerausgang des Steuerventils einstellt, was einer herkömmlichen Luftmengenverstärkung im Parkbremskreis entspricht. Dadurch dass der erste Steuerraum ebenfalls mit diesen Steuermitteln zusammenwirkt, kann auch der jeweilige in den ersten Steuerraum eingelassene Betriebsbrems-Steuerdruck Einfluss auf den Federspeicher-Bremsdruck nehmen und somit auch in Abhängigkeit davon eine pneumatisch redundante Ansteuerung der Hinterachs-Radbremsen erfolgen.

Die Steuermittel des Steuerventils werden vorzugsweise durch einen verstellbaren zweiten Steuerraum sowie einen verstellbaren zweiten Steuerkolben ausgebildet, wobei der Parkbrems-Steuerdruck über den zweiten Steuereingang in den zweiten Steuerraum eingelassen werden kann und der zweite Steuerkolben durch ein Einwirken des Parkbrems-Steuerdruckes auf den zweiten Steuerkolben in eine erste Richtung oder eine der ersten Richtung entgegen gerichteten zweite Richtung verstellbar ist. Somit kann eine einfache Kolbenverstellung erreicht werden, die für eine Luftmengenverstärkung des Parkbrems-Steuerdruckes zum Einstellen des Federspeicher-Bremsdruckes verwendet werden kann.

Vorzugsweise erfolgt dies dadurch, dass der zweite Steuerraum durch eine am verstellbaren zweiten Steuerkolben angeordnete dritte Wandung begrenzt ist, wobei die dritte Wandung gegenüber dem Ventilgehäuse derartig beweglich ist, dass der zweite Steuerkolben durch ein Einwirken des Parkbrems-Steuerdruckes auf die dritte Wandung verstellt werden kann. Dadurch wird ein einfacher Aufbau der Steuermittel zum Einstellen des Federspeicher-Bremsdruckes erreicht.

Vorzugsweise steht der erste Steuerraum mit einem ersten Steuerkolben in Wirkverbindung und der erste Steuerkolben wirkt mit dem zweiten Steuerkolben derartig zusammen, dass der zweite Steuerkolben durch eine Verstellung des ersten Steuerkolbens mitgenommen wird. Vorzugsweise ist der erste Steuerkolben dazu mit dem zweiten Steuerkolben fest verbunden.

Dadurch wird vorteilhafterweise mit einfachen Mitteln eine Wirkverbindung zwischen den Steuermitteln des Steuerventils, die für eine Umsetzung der Parkbremsung sorgen, und dem verstellbaren ersten Steuerraum, der durch den jeweiligen Betriebsbrems-Steuerdruck beeinflusst wird, geschaffen. Somit kann der Betriebsbrems-Steuerdruck im Redundanzfall für eine Anpassung des Federspeicher-Bremsdruck sorgen, indem auf die Steuermittel des Steuerventils zurückgegriffen wird, so dass ein einfacher Aufbau des Steuerventils mit dieser zusätzlichen Funktionalität (pneumatische Redundanz) erreicht wird.

Vorzugsweise ist weiterhin vorgesehen, dass der erste Steuerraum von einer gegenüber einem Ventilgehäuse beweglichen ersten Wandung sowie einer an dem Ventilgehäuse festgelegten zweiten Wandung begrenzt ist, wobei der erste Steuerkolben derartig mit der ersten Wandung verbunden ist, dass der erste Steuerkolben und der damit in Wirkverbindung stehende zweite Steuerkolben durch ein Druckerhöhen im ersten Steuerraum in eine erste Richtung gedrängt werden. Dadurch kann in einfacher Weise eine vom Betriebsbrems-Steuerdruck abhängige Verstellung des ersten Steuerraums und somit auch der beiden Steuerkolben erreicht werden.

Vorzugsweise ist der zweite Steuerraum dabei relativ zum ersten Steuerraum derartig angeordnet, dass der zweite Steuerkolben und der damit in Wirkverbindung stehende erste Steuerkolben bei einem Druckerhöhen im zweiten Steuerraum in die zweite Richtung gedrängt werden. Dadurch kann vorteilhafterweise erreicht werden, dass mit ein und demselben Steuerventil ein gegenüber dem Parkbrems-Steuerdruck invertierter Betriebsbrems-Steuerdruck mit den Steuermitteln des Steuerventils dennoch in einen dazu proportionalen Federspeicher-Bremsdruck umgewandelt werden kann. Dies wird in einfacher Weise gerade dadurch erreicht, dass eine Druckerhöhung in dem jeweiligen Steuerraum zu einer Kolbenbewegung in entgegengesetzte Richtung führt.

Bevorzugt kann dies erreicht werden, indem der zweite Steuerraum - wie auch der erste Steuerraum - ebenfalls von der am Ventilgehäuse festgelegten zweiten Wandung begrenzt ist, wobei der zweite Steuerkolben bei einer Druckerhöhung im zweiten Steuerraum von der zweiten Wandung weg in die zweite Richtung und der erste Steuerkolben bei einer Druckerhöhung im ersten Steuerraum von der zweiten Wandung weg in die erste Richtung gedrückt werden. Dadurch kann diese entgegengesetzte Beweglichkeit bei Druckerhöhung durch einfache Mittel erzielt werden.

Gemäß einer bevorzugten Weiterbildung ist vorgesehen, dass der erste Steuerraum und der zweite Steuerraum über die Steuerkolben derartig miteinander zusammenwirken, dass sich am Steuerausgang ein Federspeicher-Bremsdruck einstellt, der abhängig von dem im zweiten Steuerraum vorherrschenden Parkbrems-Steuerdruck oder dem im ersten Steuerraum vorherrschenden Betriebsbrems-Steuerdruck ist, je nachdem, welcher der beiden Steuerdrücke der höhere ist. Demnach findet durch das Steuerventil vorteilhafterweise eine Selbstregulierung statt, d.h. eine aktuell wirkende Bremsung des Fahrzeuges über die Federspeicherteile der Hinterachs-Radbremsen z.B. im geparkten Zustand bei entsprechender Parkbrems-Bremsvorgabe kann durch eine redundant vorgegebene Betriebsbrems-Bremsvorgabe, die eine geringere Bremswirkung vorgibt, nicht überschrieben werden. Liegt jedoch eine dosierte Parkbrems-Bremsvorgabe vor und eine redundante Betriebsbrems-Bremsvorgabe bei einem elektrischen Defekt oder einem Ausfall, so wird die Betriebsbrems-Bremsvorgabe umgesetzt, falls diese zu einer größeren Bremswirkung führt als die dosierte Parkbrems-Bremsvorgabe.

Gemäß einer bevorzugten Weiterbildung ist dazu vorgesehen, dass ein Flächenverhältnis zwischen der beweglichen ersten Wandung des ersten Steuerraumes und der beweglichen dritten Wandung des zweiten Steuerraumes zwischen 1:2 und 2:1 (oder ggf. auch weniger oder mehr) beträgt. Dadurch kann vorteilhaferweise eingestellt werden, wie stark die Auswirkung des Betriebsbrems-Steuerdruckes gegenüber dem Parkbrems-Steuerdruck im Steuerventil sein kann. Liegt demnach ein geringes Flächenverhältnis vor, d.h. ist die dritte Wandung sehr viel größer als die erste Wandung, so ist der Einfluss des Betriebsbrems-Steuerdruckes auf den Federspeicher-Bremsdruck geringer. Dadurch kann erreicht werden, dass der Federspeicher-Bremsdruck nicht 1:1 umgesetzt wird, d.h. eine bestimmte Druckerhöhung im ersten Steuerraum nicht zu derselben Druckerhöhung des Federspeicher-Bremsdruckes sorgt. Bei der Festlegung des Flächenverhältnisses ist weiterhin zu berücksichtigen, welche Maximalkraft auf den Federspeicher- bzw. Membranteil des Kombizylinders der Hinterachs-Radbremsen wirken kann.

Gemäß einer bevorzugten Weiterbildung ist vorgesehen, dass als Steuermittel weiterhin ein durch eine Druckfeder vorgespannter, axial beweglicher Ventilkörper vorgesehen ist, wobei der Steuerausgang je nach axialer Verstellung des Ventilkörpers entweder über einen Druckraum mit einem Entlüftungsanschluss zum Reduzieren des Federspeicher-Bremsdruckes oder mit einem Versorgungsanschluss zum Erhöhen des Federspeicher-Bremsdruckes verbindbar ist, wobei der zweite Steuerkolben in Abhängigkeit des Parkbrems-Steuerdruckes und/oder des Betriebsbrems-Steuerdruckes den Ventilkörper axial verstellen kann. Dadurch wird in einfacher Weise ein vom jeweiligen Steuerdruck abhängiges einstellen des Federspeicher-Bremsdruckes ermöglicht.

Zur redundanten Steuerung des Federspeicher-Bremsdruckes in Abhängigkeit des jeweiligen Betriebsbrems-Steuerdruckes ist erfindungsgemäß vorgesehen, dass das Steuerventil eine Steuereinrichtung aufweist, wobei die Steuereinrichtung einen dritten Steuerkolben im Steuerventil derartig umschalten kann, dass der erste Steueranschluss über einen Verbindungskanal mit dem verstellbaren ersten Steuerraum verbunden ist. Erst dadurch wird der jeweilige Betriebsbrems-Steuerdruck in den ersten Steuerraum geleitet und kann mittelbar auf die Steuermittel einwirken. In einer weiteren Schaltstellung kann der dritte Steuerkolben von der Steuereinrichtung so verstellt werden, dass die Atmosphäre mit dem ersten Steuerraum verbunden ist zum Entlüften des ersten Steuerraumes. Dies ist dann der Fall, wenn der Betriebsbrems-Steuerdruck keinen Einfluss auf den Federspeicher-Bremsdruck haben soll, d.h. insbesondere dann, wenn das Bremssystem normal funktioniert und somit keine redundante pneumatische Ansteuerung der Hinterachs-Radbremsen erforderlich ist.

Erfindungsgemäß ist demnach ein elektronisch steuerbares Bremssystem mit Vorderachs-Radbremsen, Hinterachs-Radbremsen mit einem Federspeicherteil und einem Membranteil, einem elektropneumatisch steuerbaren Vorderachs-Druckmodulator zur Ausgabe eines Vorderachs-Bremsdruckes an die Vorderachs-Radbremsen, einem elektronisch steuerbaren Hinterachs-Druckmodulator zur Ausgabe eines Membran-Bremsdruckes an die Membranteile der Hinterachs-Radbremsen, einem Zentralmodul und einem elektropneumatischen ein- oder mehrkanaligen Betriebsbremsventil vorgesehen. Das Betriebsbremsventil ist hierbei ausgebildet, in Abhängigkeit einer Betriebsbrems-Bremsvorgabe ein elektrisches Betriebsbrems-Betätigungssignal an das Zentralmodul auszugeben, wobei das Zentralmodul signalleitend mit dem Vorderachs-Druckmodulator und dem Hinterachs-Druckmodulator verbunden ist zum Übertragen von dem Betriebsbrems-Betätigungssignal abhängigen Steuersignalen an die Druckmodulatoren im Normalbetrieb. Das Betriebsbremsventil ist weiterhin ausgebildet, in Abhängigkeit der Betriebsbrems-Bremsvorgabe einen pneumatischen Betriebsbrems-Steuerdruck auszugeben, wobei der Vorderachs-Druckmodulator im Redundanzfall über einen Redundanz-Anschluss mit dem Vorderachs-Betriebsbrems-Steuerdruck ansteuerbar ist.

Weiterhin weist das Bremssystem ein Parkbremsventil auf, wobei das Parkbremsventil in Abhängigkeit einer Parkbrems-Bremsvorgabe einen Parkbrems-Steuerdruck an den zweiten Steuereingang des erfindungsgemäßen Steuerventils ausgeben kann, wobei das Steuerventil in Abhängigkeit des Parkbrems-Steuerdruckes einen Federspeicher-Bremsdruck erzeugt und über einen Steuerausgang an die Federspeicherteile der Hinterachs-Radbremsen ausgibt. Das Betriebsbremsventil ist erfindungsgemäß weiterhin mit einem ersten Steuereingang des Steuerventils verbunden, um auch den jeweiligen Betriebsbrems-Steuerdruck an das Steuerventil zu übertragen und somit zu ermöglichen, dass der Federspeicher-Bremsdruck in Abhängigkeit des Parkbrems-Steuerdruckes und/oder des Betriebsbrems-Steuerdruckes eingestellt werden kann.

Vorzugsweise ist dabei vorgesehen, dass das Zentralmodul signalleitend mit dem Steuerventil verbunden ist zum Übermitteln des Umschaltsignals zum wahlweisen Verbinden des ersten Steueranschlusses des Steuerventils mit dem ersten Steuerraum oder der Atmosphäre mit dem ersten Steuerraum, wobei im Normalbetrieb ohne Vorliegen eines Defektes oder eines Ausfalls bei der elektrischen Ansteuerung des Hinterachs-Druckmodulators über das Umschaltsignal vorgebbar ist, dass die Atmosphäre mit dem ersten Steuerraum verbunden ist und sonst der erste Steueranschluss des Steuerventils mit dem ersten Steuerraum verbunden ist. Dadurch kann vorteilhaferweise eingestellt werden, dass eine Weiterleitung des Betriebsbrems-Steuerdruckes in den ersten Steuerraum nur dann erfolgt, wenn tatsächlich ein elektrischer Defekt bei der Ansteuerung der Membranteile der Hinterachs-Radbremsen vorliegt und somit eine redundante Ansteuerung der Hinterachs-Radbremsen erforderlich ist.

Erfindungsgemäß ist in einem Verfahren somit vorgesehen, dass der erste Steuereingang des Steuerventils bei Feststellen eines elektrischen Defektes oder eines Ausfalls bei der elektrischen Ansteuerung der Hinterachs-Radbremsen durch den Membranteil mit dem ersten Steuerraum verbunden wird, so dass ein vom jeweiligen Betriebsbrems-Steuerdruck abhängiger Federspeicher-Bremsdruck an die Federspeicherteile der Hinterachs-Radbremsen ausgesteuert werden kann. Im Normalbetrieb hingegen kann ohne Feststellen eines elektrischen Defektes oder eines Ausfalls bei der elektrischen Ansteuerung der Hinterachs-Radbremsen durch den Membranteil vom Zentralmodul über das Umschaltsignal an das Steuerventil vorgegeben werden, dass der erste Steuerraum mit der Atmosphäre verbunden wird, so dass der erste Steuerraum keinen Einfluss auf die Einstellung des Federspeicher-Bremsdruckes hat.

Die Erfindung wird im Folgenden anhand mehrerer Figuren näher erläutert. Es zeigen:
- Fig. 1: ein elektronisch steuerbares Bremssystem mit einer pneumatisch steuerbaren Parkbremse;
- Fig. 2: eine Detailansicht eines erfindungsgemäßen Steuerventils in dem elektronisch steuerbaren Bremssystem gemäß Fig. 1; und
- Fig. 3: ein Flussdiagram des erfindungsgemäßen Verfahrens.

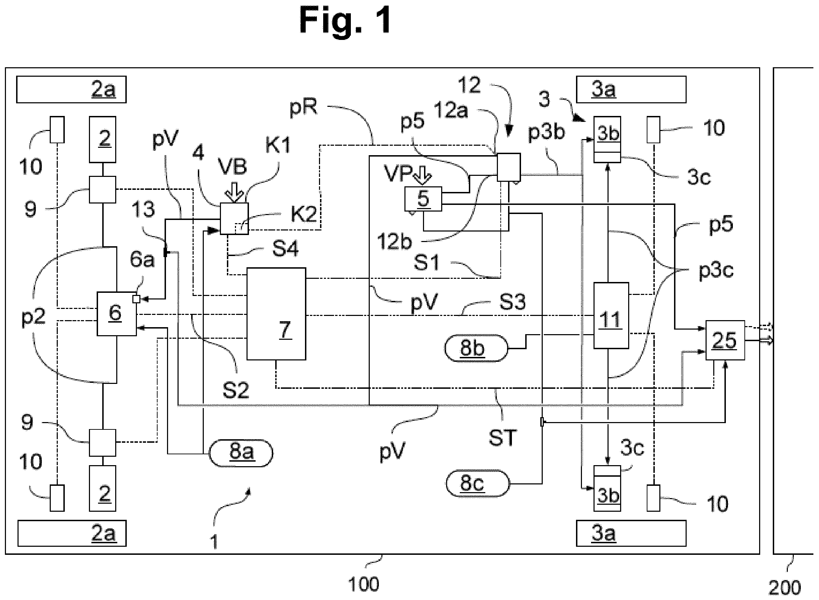

Gemäß Fig. 1 ist ein Fahrzeug-Gespann aus einem Zugfahrzeug 100 und einem daran angehängten Anhänger 200 dargestellt. Das Zugfahrzeug 100 weist ein zumindest teilweise elektrisch steuerbares zweikreisiges Bremssystem 1 auf, dessen Vorderachs- und Hinterachs-Radbremsen 2, 3 durch manuelle Betätigung eines Betriebsbremsventils 4 sowie eines Parkbremsventils 5 betätigt werden können.

An den Vorderachs-Radbremsen 2 kann bei einer Betätigung des Betriebsbremsventils 4 mit einer bestimmten Betriebsbrems-Bremsvorgabe VB elektrisch oder pneumatisch gesteuert ein der Vorgabe entsprechender Vorderachs-Bremsdruck p2 aufgebaut werden. Dazu wird in Abhängigkeit der Höhe der Betriebsbrems-Bremsvorgabe VB vom pneumatischen Teil des Betriebsbremsventils 4 ein Vorderachs-Betriebsbrems-Steuerdruck pV an ein Vorderachs-Druckregelmodul 6 über einen pneumatischen Redundanz-Anschluss 6a übertragen.

Weiterhin wird dem Vorderachs-Druckregelmodul 6 auf elektronischem Wege von einem Zentralmodul 7 ein Vorderachs-Steuersignal S2 übermittelt. Das Vorderachs-Steuersignal S2 wird aus einem Betriebsbrems-Betätigungssignal S4 gebildet, das vom elektronischen Teil des Betriebsbremsventils 4 in Abhängigkeit der Betriebsbrems-Bremsvorgabe VB an das Zentralmodul 7 ausgegeben und darin weiterverarbeitet wird. Das Zentralmodul 7 kann beispielsweise eine Achslastverteilung oder weitere übergeordnete Funktionen durchführen und in Abhängigkeit davon das Vorderachs-Steuersignal S2 erzeugen. In Abhängigkeit des Vorderachs-Steuersignals S2 wird im Vorderachs-Druckmodulator 6 ein Vorderachs-Bremsdruck p2 für die Vorderachs-Radbremsen 2 erzeugt, der zu einer Abbremsung des Zugfahrzeuges 100 gemäß der Betriebsbrems-Bremsvorgabe VB sowie ggf. der übergeordneten Funktionen führt. Dies erfolgt in bekannter Weise durch eine entsprechende elektronische Ansteuerung einer im Vorderachs-Druckmodulator 6 integrierten Einlassventil-Auslassventil-Kombination (nicht dargestellt), mit der Druckmittel aus einem ersten Druckmittelvorrat 8a entsprechend druckgemindert an die Vorderachs-Radbremsen 2 geleitet wird.

Der Vorderachs-Bremsdruck p2 kann über zusätzliche ABS-Steuerventile 9, die vor den Vorderachs-Radbremsen 2 angeordnet sind, modifiziert werden. Dadurch kann einem über Raddrehzahlsensoren 10 festgestelltem Blockieren oder drohendem Blockieren der Vorderräder 2a entgegengewirkt werden. Die Ansteuerung der ABS-Steuerventile 9 erfolgt gemäß dieser Ausführung vom Zentralmodul 7 aus, in dem eine entsprechende intelligente ABS-Steuerlogik integriert ist.

Im Normalbetrieb findet eine über das Zentralmodul 7 elektrisch gesteuerte Betätigung der Vorderachs-Radbremsen 2 statt. Fällt die elektronische Ansteuerung der Vorderachs-Druckmodulatoren 6 aus irgendeinem Grund aus, beispielsweise weil die Signalübertragung zwischen dem Zentralmodul 7 und dem Vorderachs-Druckmodulator 6 unterbrochen ist und/oder das Zentralmodul 7 und/oder der Vorderachs-Druckmodulator 6 einen Ausfall in der elektrischen Ebene aufweist, so können die Vorderachs-Radbremsen 2 über den pneumatischen Redundanz-Anschluss 6a in Abhängigkeit des pneumatischen Vorderachs-Betriebsbrems-Steuerdruckes pV auch pneumatisch gesteuert werden. Dazu wird der vom Betriebsbremsventil 4 ausgegebene Vorderachs-Betriebsbrems-Steuerdruck pV im Vorderachs-Druckmodulator 6 entsprechend luftmengenverstärkt und als Vorderachs-Bremsdruck p2 an die Vorderachs-Radbremsen 2 ausgegeben. Dadurch wird eine pneumatisch gesteuerte Rückfallebene für die Vorderachs-Radbremsen 2 ausgebildet, sodass das Zugfahrzeug 100 auch bei elektrischen Ausfällen noch über die Vorderräder 2a sicher abgebremst werden kann.

Die Hinterachs-Radbremsen 3 zu Abbremsung der Hinterräder 3a sind als kombinierte Federspeicher-Membranzylinder ausgeführt, d.h. sie weisen einen Federspeicherteil 3b und einen Membranteil 3c auf. Für eine herkömmliche Betriebsbremsfunktion kann ein Membran-Bremsdruck p3c von einem Hinterachs-Druckmodulator 11 entsprechend druckgemindert aus einem zweiten Druckmittelvorrat 8b vorgegeben werden, um den Membranteil 3c der Hinterachs-Radbremsen 3 zu betätigen. Der Hinterachs-Druckmodulator 11 unterscheidet sich hierbei von dem Vorderachs-Druckmodulator 6 dadurch, dass kein Redundanz-Anschluss für eine pneumatische Ansteuerung vorgesehen ist. Demnach kann der Hinterachs-Druckmodulator 11 lediglich elektrisch angesteuert werden, wie im Normalfall auch der Vorderachs-Druckmodulator 6.

Insofern ist der Hinterachs-Druckmodulator 11 vergleichbar zur elektrischen Ebene des Vorderachs-Druckmodulators 6 aufgebaut, so dass über ein von dem Zentralmodul 7 in Abhängigkeit der Betriebsbrems-Bremsvorgabe VB ausgegebenes Hinterachs-Steuersignal S3 von dem Hinterachs-Druckmodulator 11 über eine Einlass-Auslassventil-Kombination ein entsprechender Membran-Bremsdruck p3c erzeugt und ausgegeben werden kann. Eine blockiergeschützte Anpassung des Membran-Bremsdruckes p3c in Abhängigkeit der Messung der Drehzahlsensoren 10 an den Hinterrädern 3a erfolgt an der Hinterachse ohne zusätzliche ABS-Steuerventile bereits im Hinterachs-Druckmodulator 11. Insofern ist der Membran-Bremsdruck p3c bereits durch die ABS-Funktion angepasst.

Da der Hinterachs-Druckmodulator 11 im Gegensatz zum Vorderachs-Druckmodulator 6 keine pneumatische Redundanz aufweist, ist erfindungsgemäß vorgesehen, eine pneumatische Redundanz über den Federspeicherteil 3b der Hinterachs-Radbremsen 3 auszubilden. Der Federspeicherteil 3b funktioniert derartig, dass die Radbremsen 3 bei einem Reduzieren eines auf den Federspeicherteil 3b wirkenden Federspeicher-Bremsdrucks p3b automatisch zugespannt werden bzw. sich die Bremswirkung an den Hinterrädern 3a erhöht. Wird der Federspeicher-Bremsdruck p3b erhöht, wird der Federspeicherteil 3b entgegen eine Federvorspannung weiter geöffnet und eine Bremswirkung an den Hinterrädern 3a dadurch verringert bzw. ganz aufgehoben.

Herkömmlicherweise werden die Federspeicherteile 3b der Hinterachs-Radbremsen 3 für eine Parkbremsfunktion im Fahrzeug 100 verwendet, die über das Parkbremsventil 5 in einem Parkbremskreis gesteuert wird. Wird demnach vom Fahrer über das pneumatische Parkbremsventil 5 eine bestimmte Parkbrems-Bremsanforderung VP vorgegeben, so wird von dem Parkbremsventil 5 ein dementsprechender Parkbrems-Steuerdruck p5 ausgegeben und an einen ersten Steuereingang 12a eines Steuerventils 12 übertragen. Das Steuerventil 12 sorgt für eine Luftmengenverstärkung des Parkbrems-Steuerdrucks p5, sodass ein Federspeicher-Bremsdruck p3b über einen Steuerausgang 12c an den Federspeicherteil 3b der Hinterachs-Radbremse 3 ausgegeben wird, der zu einer der Parkbrems-Bremsanforderung VP entsprechenden Abbremsung des Fahrzeuges 100 führt.

Gibt der Fahrer dabei über die Parkbrems-Bremsanforderung VP vor, dass das Fahrzeug abgestellt werden soll, d.h. die volle Bremswirkung über die Federspeicherteile 3b erreicht werden soll, so wird die Leitung zwischen dem Parkbremsventil 5 und dem Steuerventil 12 entlüftet, so dass ein dem Atmosphärendruck entsprechender Parkbrems-Steuerdruck p5 an dem ersten Steuereingang 12a des Steuerventils 12 anliegt. Die Federvorspannung sorgt damit für ein Zuspannen der Federspeicherteile 3b. Befindet sich das Parkbremsventil 5 in einer Fahrtstellung oder einer beliebigen Zwischenstellung, so wird aus dem dritten Druckmittelvorrat 8c ein entsprechend hoher Parkbrems-Steuerdruck p5 an den ersten Steuereingang 12a vorgegeben, so dass die Federspeicherteile 3b über den Federspeicher-Bremsdruck p3b entgegen der Federvorspannung kontinuierlich geöffnet werden.

Das Steuerventil 12 wird gemäß der Erfindung derartig erweitert, dass neben der beschriebenen Parkbremsfunktion auch eine redundante pneumatische Ansteuerung der Hinterachs-Radbremsen 3 - in dem Fall über den Federspeicherteil 3b - erfolgen kann. Dies erfolgt insbesondere dann, wenn der Hinterachs-Druckmodulator 11 und/oder das Zentralmodul 7 und/oder die elektrische Verbindung dazwischen einen elektrischen Defekt oder Ausfall aufweist, das heißt eine Bremsung der Hinterräder 3a nicht mehr elektrisch gesteuert durch das Zentralmodul 7 stattfinden kann.

Dazu wird der vom pneumatischen Teil des Betriebsbremsventils 4 bei einer manuellen Bremsung ausgegebene Vorderachs-Betriebsbrems-Steuerdruck pV über eine Abzweigung 13 an einen zweiten Steuereingang 12b des Steuerventils 12 geführt, wobei das Steuerventil 12 einen zum Vorderachs-Betriebsbrems-Steuerdruck pV inversen und luftmengenverstärkten Federspeicher-Bremsdruck p3b erzeugt und über den Steuerausgang 12c an den Federspeicherteil 3b der Radbremsen 3 ausgibt. Die Luftmengenverstärkung des Parkbrems-Steuerdruckes p5 sowie des Vorderachs-Betriebsbrems-Steuerdruckes pV erfolgt im Steuerventil 12 durch eine Druckversorgung vom dritten Druckmittelvorrat 8c aus.

Alternativ kann auch vorgesehen sein, dem Steuerventil 12 statt dem Vorderachs-Betriebsbrems-Steuerdruck pV einen der Betriebsbrems-Bremsvorgabe VB entsprechenden Redundanz-Betriebsbrems-Steuerdruck pR zuzuführen, der im Betriebsbremsventil 4 vergleichbar zum Vorderachs-Betriebsbrems-Steuerdruck pV erzeugt und ausgegeben wird. Das Betriebsbremsventil 4 ist dann zweikanalig aufgebaut, wobei über einen ersten Kanal K1 der Vorderachs-Betriebsbrems-Steuerdruck pV zur pneumatischen Ansteuerung des Vorderachs-Druckmodulators 6 und über einen zweiten Kanal K2 der Redundanz-Betriebsbrems-Steuerdruck pB zur pneumatischen Ansteuerung des Steuerventils 12 erzeugt und ausgegeben werden. In Fig. 1 ist diese optionale Ausführung schematisch durch einen weiteren gestrichelten Kanal K2 am Betriebsbremsventil 4 sowie eine pneumatische Steuerleitung vom Betriebsbremsventil 4 zum ersten Steuereingang 12a des Steuerventils 12 dargestellt. In dieser gestrichelten Ausführung entfällt dann die Abzweigung 13. Im Folgenden wird die Ansteuerung über den Vorderachs-Betriebsbrems-Steuerdruck pV beschrieben, die in entsprechender Weise auf den Betriebsbrems-Steuerdruck pB übertragen werden kann.

Somit übernimmt das erfindungsgemäße Steuerventil 12 in gewissen Situationen zusätzlich die Aufgabe der Inversion und Luftmengenverstärkung des Vorderachs-Betriebsbrems-Steuerdruckes pV, so dass darüber eine redundante pneumatische Ansteuerung der Hinterachs-Radbremsen 3 erfolgen kann. Um der Parkbrems-Bremsvorgabe VP eine höhere Priorität einzuräumen, ist das Steuerventil 12 gemäß dieser Ausführungsform derartig ausgeführt, dass die Umsetzung der Parkbrems-Bremsvorgabe VP bzw. die Luftmengenverstärkung des Parkbrems-Steuerdruckes p5 Vorrang gegenüber vor der Invertierung und Luftmengenverstärkung des Vorderachs-Betriebsbrems-Steuerdruckes pV.

Weiterhin ist in dieser Ausführungsform vorgegeben, dass eine pneumatische Ansteuerung des Steuerventils 12 mit dem Vorderachs-Betriebsbrems-Steuerdruck pV nur dann zu einer Ausgabe eines entsprechenden Federspeicher-Bremsdruckes p3b an den Federspeicherteil 3b führt, wenn eine elektrische Ansteuerung über den Hinterachs-Druckmodulator 11 und eine entsprechende Ausgabe des Membran-Bremsdruckes p3c fehlschlägt. Andernfalls bleibt eine Übertragung des Vorderachs-Betriebsbrems-Steuerdruckes pV an das Steuerventil 12 über den zweiten Steuereingang 12b ohne Auswirkungen auf den Federspeicherteil 3b der Hinterachs-Radbremsen 3.

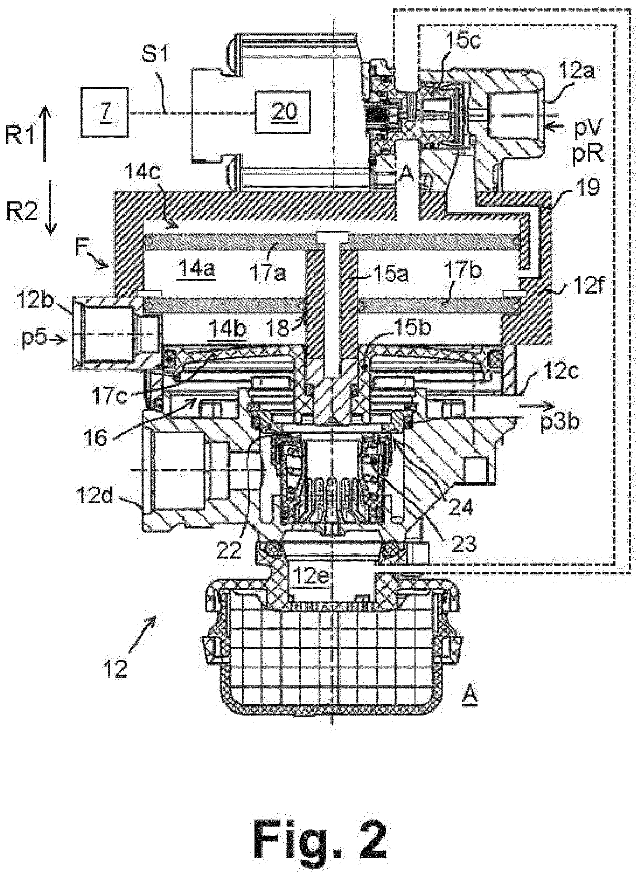

Um all dies zu erreichen, ist das in Fig. 2 dargestellte Steuerventil 12 vorgesehen. Das Steuerventil 12 besteht aus den Steuereingängen 12a, 12b, über die der Vorderachs-Betriebsbrems-Steuerdruck pV bzw. der Parkbrems-Steuerdruck p5 vorgegeben werden, und dem Steuerausgang 12c, der den Federspeicher-Bremsdruck p3b an den Federspeicherteil 3b ausgibt. Weiterhin ist ein Versorgungsanschluss 12d vorgesehen, der mit dem dritten Druckmittelvorrat 8c verbunden ist und für eine Bereitstellung des Druckmittels an das Steuerventil 12 sorgt. Über einen Entlüftungsanschluss 12e kann das Steuerventil 12 mit der Atmosphäre A verbunden werden.

Das Steuerventil 12 weist als Funktionselemente weiterhin drei Steuerräume 14a, 14b, 14c und drei Steuerkolben 15a, 15b, 15c auf, wobei zwei der Steuerkolben 15a, 15b fest miteinander verbunden sind und sich somit gegenseitig mitnehmen. Durch eine axiale Bewegung der zwei Steuerkolben 15a, 15b kann ein Druckraum 16 des Steuerventils 12 mit dem Versorgungsanschluss 12d oder dem Entlüftungsanschluss 12e verbunden werden. Der Druckraum 16 ist weiterhin mit dem Steuerausgang 12c verbunden, so dass je nach axialer Stellung der beiden Steuerkolben 15a, 15b eine Druckerhöhung (über 12d) oder eine Druckreduzierung (über 12e) des am Steuerausgang 12c anliegenden Federspeicher-Bremsdruckes p3b erfolgen kann. Dies erfolgt nach dem folgenden Prinzip:
Ein erster Steuerkolben 15a ist mit einer ersten Wandung 17a verbunden und in einer Öffnung 18 in einer zweiten feststehenden Wandung 17b des Steuerventils 12 axial verschiebbar gelagert. Die Öffnung 18 ist ebenso wie die erste Wandung 17a abgedichtet, so dass zwischen der ersten Wandung 17a und der zweiten Wandung 17b sowie einem Ventilgehäuse 12f des Steuerventils 12 ein erster Steuerraum 14a ausgebildet wird, der durch eine axiale Verschiebung des ersten Steuerkolbens 15a und der damit verbundenen ersten Wandung 17a vergrößert und verkleinert werden kann. Der erste Steuerraum 14a ist über einen Verbindungskanal 19 mit dem ersten Steuereingang 12a des Steuerventils 12 verbunden, um das Druckmittel mit dem Vorderachs-Betriebsbrems-Steuerdruck pV in den ersten Steuerraum 14a leiten zu können. Die Verbindung zwischen dem ersten Steuerraum 14a und dem ersten Steuereingang 12a kann über einen dritten Steuerkolben 15c blockiert werden.

Der dritte Steuerkolben 15c kann dazu elektrisch gesteuert von einer Steuereinrichtung 20 umgeschaltet werden, um den Vorderachs-Betriebsbrems-Steuerdruck pV freizugeben oder zu blockieren. Die Steuereinrichtung 20 ist dazu mit dem Zentralmodul 7 signalleitend verbunden. Das Zentralmodul 7 gibt im Normalbetrieb ohne Vorliegen eines elektrischen Fehlers über ein Umschaltsignal S1 den Befehl zum Umschalten des dritten Steuerkolbens 15c derartig, dass der Vorderachs-Betriebsbrems-Steuerdruck pV am ersten Steuereingang 12a durch den dritten Steuerkolben 15c blockiert wird. Stattdessen wird der Verbindungskanal 19 durch die Stellung des dritten Steuerkolbens 15c mit dem Entlüftungsanschluss 12e über einen in beliebiger Weise am Steuerventil 12 angeordneten Entlüftungskanal 21 verbunden. Dadurch steht der erste Steuerraum 14a unter Atmosphärendruck, so dass im Normalbetrieb erreicht wird, dass der Vorderachs-Betriebsbrems-Steuerdruck pV die Funktion des Steuerventils 12 nicht beeinflusst. Fällt das Zentralmodul 7 aus oder liegt ein anderer elektrischer Fehler im Hinterachs-Druckmodulator 11 oder bei der Ansteuerung des Hinterachs-Druckmodulators 11 vor, so wird kein Umschaltsignal S1 an das Steuerventil 12 übertragen. Die Steuereinrichtung 20 schaltet den dritten Steuerkolben 15c dann automatisch derartig um, dass der Vorderachs-Betriebsbrems-Steuerdruck pV in den ersten Steuerraum 14a eingelassen wird.

Oberhalb der ersten Wandung 17a und unterhalb des Ventilgehäuses 12f wird weiterhin ein dritter Steuerraum 14c definiert, der in beliebiger Weise dauerhaft mit dem Entlüftungsanschluss 12e verbunden ist und somit unter Atmosphärendruck steht. Dadurch wird bei einer Druckveränderung im ersten Steuerraum 14a eine axiale Verschiebung der ersten Wandung 17a ermöglicht.

Eine dritte Wandung 17c des zweiten Steuerkolbens 15b definiert zusammen mit der feststehenden zweiten Wandung 17b einen zweiten Steuerraum 14b. In diesen ragt in diesem Ausführungsbeispiel der erste Steuerkolben 15a hindurch, um im unteren Bereich eine feste Verbindung mit dem zweiten Steuerkolben 15b zu erhalten. Der zweite Steuerraum 14b ist mit dem zweiten Steuereingang 12b verbunden, so dass der am zweiten Steuereingang 12b anliegende Parkbrems-Steuerdruck p5 auch im zweiten Steuerraum 14b wirkt. Je nach Höhe des Parkbrems-Steuerdruckes p5 wird der zweite Steuerkolben 15b über die dritte Wandung 17c zusammen mit dem ersten Steuerkolben 15a axial nach oben in eine erste Richtung R1 oder unten in eine zweite Richtung R2 verschoben.

Bei betätigtem Parkbremsventil 5 ist der zweite Steuereingang 12b zunächst entlüftet, so dass ein dem Atmosphärendruck entsprechender Parkbrems-Steuerdruck p5 im zweiten Steuerraum 14b vorliegt. Dadurch ergibt sich der in Fig. 2 dargestellte Zustand, in dem der zweite Steuerkolben 15b aufgrund der geringen Druckwirkung auf die dritte Wandung 17c axial nach oben verstellt ist. Dadurch wird der Druckraum 16 mit dem Entlüftungsanschluss 12e verbunden und der Steuerausgang 12c ebenfalls entlüftet, d.h. es liegt ein geringer Federspeicher-Bremsdruck p3b vor, so dass die Federspeicherteile 3b der Hinterachs-Radbremsen 3 durch die Federvorspannung zugespannt werden.

Bei steigendem Parkbrems-Steuerdruck p5 im zweiten Steuerraum 14b aufgrund einer Rücknahme der Betätigung des Parkbremsventils 5 wird der zweite Steuerkolben 15b über die dritte Wandung 17c axial nach unten gedrückt, bis dieser mit seinem unteren Bereich ab einer bestimmten axialen Verstellung abdichtend gegen einen Ventilkörper 22 gelangt, so dass die Verbindung zwischen dem Steuerausgang 12c und dem Entlüftungsanschluss 12e über den Druckraum 16 gegenüber dem Zustand in Fig.2 getrennt wird. Der Druckraum 16 ist dann nur noch mit dem Steuerausgang 12c verbunden. Der Federspeicher-Bremsdruck p3b wird dadurch gehalten.

Bei einer weiteren Druckerhöhung des Parkbrems-Steuerdruckes p5 drückt der zweite Steuerkolben 15b den Ventilkörper 22 gegen die Kraft einer Druckfeder 23 nach unten, wodurch ein Durchlass 24 öffnet, so dass eine Verbindung zwischen dem Versorgungsanschluss 12d und dem Steuerausgang 12c über den Druckraum 16 hergestellt wird. Infolge dessen erhöht sich der Federspeicher-Bremsdruck p3b und der Federspeicherteil 3b wird entgegen der Federkraft geöffnet, so dass die Hinterachs-Radbremsen 3 keine oder weniger Bremswirkung entfalten.

Aufgrund der festen Verbindung zwischen den beiden Steuerkolben 15a, 15b kann die soeben beschriebene Steuerfunktion, d.h. die Verbindung des Entlüftungsanschlusses 12e mit dem Steuerausgang 12c zum Zuspannen des Federspeicherteils 3b bzw. die Verbindung des Versorgungsanschlusses 12d mit dem Steuerausgang 12c zum Öffnen des Federspeicherteils 3b ebenso auch durch die Änderung des Druckes im ersten Steuerraum 14a erfolgen. Dies kann bei einem Ausbleiben des Umschaltsignals S1 wie oben bereits angedeutet geschehen:
Im Unterschied zum zweiten Steuerraum 14b bewirkt eine Druckerhöhung im ersten Steuerraum 14a eine axiale Verstellung der beiden Steuerkolben 15a, 15b nach oben. Dadurch findet eine Invertierung des Vorderachs-Betriebsbrems-Steuerdruckes pV statt, da bei einem hohen Vorderachs-Betriebsbrems-Steuerdruck pV der zweite Steuerkolben 15b vom Ventilkörper 22 abhebt und der Steuerausgang 12c damit mit dem Entlüftungsanschluss 12e verbunden ist und somit über einen niedrigen Federspeicher-Bremsdruck p3b die Federspeicherteile 3b zugespannt werden können. Bei einem niedriger werdenden Vorderachs-Betriebsbrems-Steuerdruck pV hingegen wird das Volumen im ersten Steuerraum 14a geringer und eine Verbindung des Steuerausgangs 12c mit dem Versorgungsanschluss 12d infolge einer axialen Verstellung der Steuerkolben 15a, 15b nach unten zu einem steigenden Federspeicher-Bremsdruck p3b und damit zu einem Lösen der Federspeicherteile 3b der Hinterachs-Radbremsen 3 führen.

Durch die soeben beschriebene Funktionalität des Steuerventils 12 kann erreicht werden, dass trotz einer redundanten Betriebsbrems-Bremsvorgabe VB (kein Umschaltsignal S1) eine entsprechend vorliegende Parkbrems-Bremsvorgabe VP tatsächlich zu einer Abbremsung bzw. einem Halten des Fahrzeuges 100 im z.B. abgestellten Zustand führt. Dies wird durch die umgekehrt wirkenden Steuerkolben 15a, 15b sowie die wirkende Druckfeder 23 erreicht. Liegt z.B. bei einer vollen Parkbrems-Bremsvorgabe VP ein niedriger Parkbrems-Steuerdruck p5 im zweiten Steuerraum 14b vor, so wäre der Steuerausgang 12c zum Lösen der Federspeicherteile 3b mit dem Versorgungsanschluss 12d zu verbinden. D.h. der erste Steuerkolben 15a müsste für eine axiale Bewegung des zweiten Steuerkolbens 15b nach unten in Fig. 2 sorgen. Dies kann, wenn überhaupt, nur dann erfolgen, wenn im ersten Steuerraum 14a ein sehr geringer Vorderachs-Betriebsbrems-Steuerdruck pV vorliegt, da sonst ein axiales Anheben der Steuerkolben 15a, 15b stattfindet. Wird von einem niedrigen Vorderachs-Betriebsbrems-Steuerdruck pV - entsprechend einer geringen redundanten Betriebsbrems-Bremsvorgabe VB - ausgegangen, der nicht unter den Atmosphärendruck, der im zweiten Steuerraum 14b aktuell vorliegt, sinken kann, ist dieser nicht in der Lage, eine ausreichend hohe Druckkraft zum Zusammendrücken der Druckfeder 23 zu sorgen. Die Druckfeder 23 ist dementsprechend auszulegen. Dadurch wird ein Lösen der Federspeicherteile 3b unterbunden.

Liegt umgekehrt keine Parkbrems-Bremsvorgabe VP vor, so werden die Steuerkolben 15a, 15b im Normalbetrieb axial nach unten verstellt, so dass ein maximaler Federspeicher-Bremsdruck p3b wirkt. Der bei einer redundanten Betriebsbrems-Bremsvorgabe VB (kein Umschaltsignal S1) im ersten Steuerraum 14a vorherrschende Vorderachs-Betriebsbrems-Steuerdruck pV drückt dann entgegen dieser axialen Bewegung die Steuerkolben 15a, 15b zu einem gewissen Maße wieder nach oben, so dass sich der Federspeicher-Bremsdruck p3b wieder abbaut und ein teilweises Zuspannen der Federspeicherteile 3b erreicht wird. Die durch die vorherrschenden Steuerdrücke p5, pV auf die beiden Steuerkolben 15a, 15b wirkenden Kräfte überlagern sich somit, so dass durch die Federspeicherteile 3b eine entsprechende Bremswirkung erreicht wird.

Durch eine Anpassung eines Flächenverhältnisses der ersten und dritten Wandung 17a, 17c zueinander kann der Einfluss des Vorderachs-Betriebsbrems-Steuerdruckes pV auf die Federspeicherteile 3b im pneumatischen Redundanzfall eingestellt werden. Demnach kann beispielsweise bei einem Flächenverhältnis F von 1:2 zwischen der ersten Wandung 17a und der dritten Wandung 17c eingestellt werden, dass lediglich ein Anteil von z.B. 50% (bei gleicher Maximalkraft des Membran- und Federspeicherteils 3b, 3c des Kombizylinders in den Hinterachs-Radbremsen 3) der über den Vorderachs-Betriebsbrems-Steuerdruckes pV pneumatisch angeforderten Bremswirkung redundant von den Federspeicherteilen 3b an der Hinterachse umgesetzt wird. D.h. der Parkbrems-Steuerdruck p5 im zweiten Steuerraum 14b bewirkt eine höhere axiale Kraft auf die Steuerkolben 15a, 15b als ein vergleichbarer Vorderachs-Betriebsbrems-Steuerdruck pV im ersten Steuerraum 14a. Dadurch wird festgelegt, welcher Anteil der Bremswirkung im Redundanzfall tatsächlich auf die Hinterräder 3a ausgeübt werden soll.

Zur Auswahl des Flächenverhältnisses F ist ggf. auch das Kraftverhältnis des Membran- zum Federspeicherteil 3a, 3b des Kombizylinders in den Hinterachs-Radbremsen 3 zu berücksichtigen. Ist demnach die Maximalkraft des Federspeicherteils 3b z.B. halb so groß wie die Maximalkraft des Membranteils 3c, so ist zum Umsetzen eines Anteils von 50% der über den Vorderachs-Betriebsbrems-Steuerdruck pV pneumatisch angeforderten Bremswirkung mit den Federspeicherteilen 3b gemäß dem obigen Beispiel ein Flächenverhältnis F von ca. 1:1 vorzusehen.

Insbesondere können die Flächenverhältnisse F derartig eingestellt werden, dass bei einer nicht vollen Parkbrems-Bremsvorgabe VP und einer vollen redundanten Betriebsbrems-Bremsvorgabe VB (kein Umschaltsignal S1) die Federspeicherteile 3b voll zugespannt werden, um im Redundanzfall die maximale Bremswirkung auf der Hinterachse abrufen zu können. Sind sowohl die Parkbrems-Bremsvorgabe VP also auch die redundante Betriebsbrems-Bremsvorgabe VB (kein Umschaltsignal S1) nicht maximal, so kann über die Flächenverhältnisse F eingestellt werden, dass immer die maximale der beiden Bremswirkungen von den Federspeicherteilen 3b umgesetzt wird.

Über ein Anhänger-Steuerventil 25 kann in gewohnter Weise eine elektrische und/oder pneumatische Übertragung des Vorderachs-Betriebsbrems-Steuerdruckes pV sowie des Parkbrems-Steuerdruckes p5 bzw. eines elektrischen Anhänger-Steuersignals ST erfolgen, um auch den Anhänger 200 abbremsen zu können.

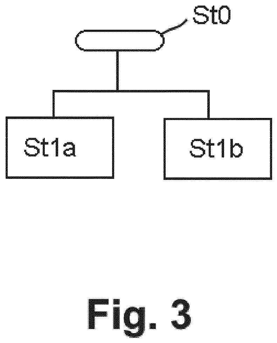

Somit kann erfindungsgemäß gemäß Fig. 3 erreicht werden, dass in einem Verfahren zunächst geprüft wird, ob das Zentralmodul 7 einen Defekt aufweist und/oder die Verbindung zum Hinterachs-Druckmodulator 11 einen Defekt aufweist und somit eine elektrische Ansteuerung der Hinterachs-Radbremsen 3 nicht möglich ist (St0). Ist dies nicht der Fall, wird dem Steuerventil 12 in einem ersten Alternativ-Schritt St1a über das Umschaltsignal S1 vorgegeben, dass der dritte Steuerkolben 15c ein Einleiten des Vorderachs-Betriebsbrems-Steuerdruckes pV oder des Redundanz-Betriebsbrems-Steuerdruckes pR in den ersten Steuerraum 14a verhindert. Der erste Steuerraum 14a ist damit mit der Atmosphäre A verbunden und beeinflusst das Umsetzen der Parkbrems-Bremsvorgabe VP nicht. Liegt jedoch ein Defekt in der elektrischen Ansteuerung des Hinterachs-Druckmodulators 11 vor, bleibt das Umschaltsignal S1 aus und dem Steuerventil 12 wird in einem zweiten Alternativ-Schritt St1b vorgegeben, dass der Vorderachs-Betriebsbrems-Steuerdruck pV oder der Redundanz-Betriebsbrems-Steuerdruck pR in den ersten Steuerraum 14a eingelassen werden soll. Liegt keine Parkbrems-Bremsvorgabe VP vor, so wird eine dem Vorderachs-Betriebsbrems-Steuerdruck pV bzw. dem Redundanz-Betriebsbrems-Steuerdruck pR entsprechende Bremswirkung bei Vorliegen einer Betriebsbrems-Bremsvorgabe VB wie beschrieben über die Federspeicherteile 3b umgesetzt. Bei Vorliegen einer Parkbrems-Bremsvorgabe VP und gleichzeitigem redundanten pneumatischen Ansteuern des Steuerventils 12 mit dem Vorderachs-Betriebsbrems-Steuerdruck pV bzw. dem Redundanz-Betriebsbrems-Steuerdruck pR, d.h. ohne Vorliegen eines Umschaltsignals S1, wird das redundante Umsetzen der Betriebsbrems-Bremsvorgabe VB an den Hinterrädern 3b wie beschrieben automatisch verhindert.

### Bezugszeichenliste (Teil der Beschreibung)

- 1: Bremssystem
- 2: Vorderachs-Radbremsen
- 2a: Vorderräder
- 3: Hinterachs-Radbremsen
- 3a: Hinterräder
- 3b: Federspeicherteil der Hinterachs-Radbremsen 3
- 3c: Membranteil der Hinterachs-Radbremsen 3
- 4: Betriebsbremsventil
- 5: Parkbremsventil
- 6: Vorderachs-Druckmodulator
- 6a: Redundanz-Anschluss
- 7: Zentralmodul
- 8a: erster Druckmittelvorrat
- 8b: zweiter Druckmittelvorrat
- 8c: dritter Druckmittelvorrat
- 9: ABS-Steuerventile
- 10: Raddrehzahlsensoren
- 11: Hinterachs-Druckmodulator
- 12: Steuerventil
- 12a: erster Steuereingang des Steuerventils 12
- 12b: zweiter Steuereingang des Steuerventils 12
- 12c: Steuerausgang
- 12d: Versorgungsanschluss
- 12e: Entlüftungsanschluss
- 12f: Ventilgehäuse
- 13: Abzweigung
- 14a: erster Steuerraum
- 14b: zweiter Steuerraum
- 14c: dritter Steuerraum
- 15a: erster Steuerkolben
- 15b: zweiter Steuerkolben
- 15c: dritter Steuerkolben
- 16: Druckraum
- 17a: erste Wandung
- 17b: zweite Wandung
- 17c: dritte Wandung
- 18: Öffnung
- 19: Verbindungskanal
- 20: Steuereinrichtung
- 21: Entlüftungskanal
- 22: Ventilkörper
- 23: Druckfeder
- 24: Durchlass
- 25: Anhänger-Steuerventil
- 100: Zugfahrzeug
- 200: Anhänger

- A: Atmosphäre
- F: Flächenverhältnis
- K1: erster Kanal des Betriebsbremsventils 4
- K2: zweiter Kanal des Betriebsbremsventils 4
- p2: Vorderachs-Bremsdruck
- p3b: Federspeicher-Bremsdruck
- p3c: Membran-Bremsdruck
- p5: Parkbrems-Steuerdruck
- pR: Redundanz-Betriebsbrems-Steuerdruck
- pV: Vorderachs-Betriebsbrems-Steuerdruck
- R1: erste Richtung
- R2: zweite Richtung
- S1: Umschaltsignal
- S2: Vorderachs-Steuersignal
- S3: Hinterachs-Steuersignal
- S4: Betriebsbrems-Betätigungssignal
- ST: Anhänger-Steuersignal
- VB: Betriebsbrems-Bremsvorgabe
- VP: Parkbrems-Bremsvorgabe

- St0, St1a, St1b: Schritte des Verfahrens

## Patentansprüche

1. Steuerventil (12) für das Aussteuern eines Federspeicher-Bremsdruckes (p3b) an Federspeicherteile (3b) einer Hinterachs-Radbremse (3), wobei das Steuerventil (12) pneumatisch über einen zweiten Steuereingang (12b) mit einem Parkbrems-Steuerdruck (p5) ansteuerbar ist, wobei der Parkbrems-Steuerdruck (p5) derartig auf in einem Ventilgehäuse (12f) des Steuerventils (12) angeordnete Steuermittel (14b, 15b, 17c, 22, 23, 24) einwirken kann, dass sich an einem Steuerausgang (12c) des Steuerventils (12) ein Federspeicher-Bremsdruck (p3b) in Abhängigkeit des Parkbrems-Steuerdruckes (p5) einstellt für das Bewirken einer Parkbrems-Bremsvorgabe (VP) mit den Federspeicherteilen (3b) der Hinterachs-Radbremsen (3),
wobei
das Steuerventil (12) weiterhin einen ersten Steueranschluss (12a) für das Ansteuern des Steuerventils (12) mit einem von einer Betriebsbrems-Bremsvorgabe (VB) abhängigen Betriebsbrems-Steuerdruck (pV; pR) aufweist, wobei der erste Steueranschluss (12a) mit einem verstellbaren ersten Steuerraum (14a) verbindbar ist, wobei der erste Steuerraum (14a) derartig mit den im Steuerventil (12) angeordneten Steuermitteln (14b, 15b, 17c, 22, 23, 24) in Wirkverbindung steht, dass der Federspeicher-Bremsdruck (p3b) am Steuerausgang (12c) bei einer Verstellung des ersten Steuerraumes (14a) infolge einer Druckbeaufschlagung mit dem Betriebsbrems-Steuerdruck (pV; pR) in Abhängigkeit des Betriebsbrems-Steuerdruckes (pV; pR) und/oder des Parkbrems-Steuerdruckes (p5) einstellbar ist, **dadurch gekennzeichnet, dass** das Steuerventil (12) eine Steuereinrichtung (20) aufweist, wobei die Steuereinrichtung (20) einen dritten Steuerkolben (15c) derartig umschalten kann, dass der erste Steueranschluss (12a) über einen Verbindungskanal (19) mit dem verstellbaren ersten Steuerraum (14a) verbunden ist zum Durchleiten des Betriebsbrems-Steuerdruckes (pV; pR) in den ersten Steuerraum (14a) oder dass die Atmosphäre (A) mit dem ersten Steuerraum (14a) verbunden ist zum Entlüften des ersten Steuerraumes (14a).

2. Steuerventil (12) nach Anspruch 1, **dadurch gekennzeichnet, dass** die Steuermittel durch einen verstellbaren zweiten Steuerraum (14b) sowie einen verstellbaren zweiten Steuerkolben (15b) ausgebildet sind, wobei der Parkbrems-Steuerdruck (p5) über den zweiten Steuereingang (12b) in den zweiten Steuerraum (14b) eingelassen werden kann und der zweite Steuerkolben (15b) durch ein Einwirken des Parkbrems-Steuerdruckes (p5) auf den zweiten Steuerkolben (15b) in eine erste Richtung (R1) oder eine der ersten Richtung (R1) entgegen gerichtete zweite Richtung (R2) verstellbar ist.

3. Steuerventil (12) nach Anspruch 2, **dadurch gekennzeichnet, dass** der zweite Steuerraum (14b) durch eine am verstellbaren zweiten Steuerkolben (15b) angeordnete dritte Wandung (17c) begrenzt ist, wobei die dritte Wandung (17c) gegenüber dem Ventilgehäuse (12f) derartig beweglich ist, dass der zweite Steuerkolben (15b) durch ein Einwirken des Parkbrems-Steuerdruckes (p5) auf die dritte Wandung (17c) verstellt werden kann.

4. Steuerventil (12) nach einem der Ansprüche 2 oder 3, **dadurch gekennzeichnet, dass** der erste Steuerraum (14a) mit einem ersten Steuerkolben (15a) in Wirkverbindung steht, wobei der erste Steuerkolben (15a) mit dem zweiten Steuerkolben (15b) derartig in Wirkverbindung steht, dass der zweite Steuerkolben (15b) durch eine Verstellung des ersten Steuerkolbens (15a) mitgenommen wird.

5. Steuerventil (12) nach Anspruch 4, **dadurch gekennzeichnet, dass** der erste Steuerkolben (15a) und der zweite Steuerkolben (15b) fest miteinander verbunden sind.

6. Steuerventil (12) nach Anspruch 4 oder 5, **dadurch gekennzeichnet, dass** der erste Steuerraum (14a) von einer gegenüber einem Ventilgehäuse (12f) beweglichen ersten Wandung (17a) sowie einer an dem Ventilgehäuse (12f) festgelegten zweiten Wandung (17b) begrenzt ist, wobei der erste Steuerkolben (15a) derartig mit der ersten Wandung (17a) verbunden ist, dass der erste Steuerkolben (15a) und der damit in Wirkverbindung stehende zweite Steuerkolben (15b) durch ein Druckerhöhen im ersten Steuerraum (14a) in eine erste Richtung (R1) gedrängt werden.

7. Steuerventil (12) nach einem der Ansprüche 4 bis 6, **dadurch gekennzeichnet, dass** der zweite Steuerraum (14b) relativ zum ersten Steuerraum (14a) derartig angeordnet ist, dass der zweite Steuerkolben (15b) und der damit in Wirkverbindung stehende erste Steuerkolben (15a) bei einem Druckerhöhen im zweiten Steuerraum (14b) in die zweite Richtung (R2) gedrängt werden.

8. Steuerventil (12) nach Anspruch 7 in Verbindung mit Anspruch 6, **dadurch gekennzeichnet, dass** der zweite Steuerraum (14b) ebenfalls von der am Ventilgehäuse (12f) festgelegten zweiten Wandung (17b) begrenzt ist, wobei der zweite Steuerkolben (15b) bei einer Druckerhöhung im zweiten Steuerraum (14b) von der zweiten Wandung (17b) weg in die zweite Richtung (R2) und der erste Steuerkolben (15a) bei einer Druckerhöhung im ersten Steuerraum (14a) von der zweiten Wandung (17b) weg in die erste Richtung (R1) gedrückt werden.

9. Steuerventil (12) nach einem der Ansprüche 2 bis 8 in Verbindung mit Anspruch 4, **dadurch gekennzeichnet, dass** der erste Steuerraum (14a) und der zweite Steuerraum (14b) über die Steuerkolben (15a, 15b) derartig miteinander zusammenwirken, dass sich am Steuerausgang (12c) ein Federspeicher-Bremsdruck (p3b) einstellt, der abhängig von dem im zweiten Steuerraum (14b) vorherrschenden Parkbrems-Steuerdruck (p5) oder dem im ersten Steuerraum (14a) vorherrschenden Betriebsbrems-Steuerdruck (pV; pR) ist, je nachdem, welcher der beiden Steuerdrücke (p5, pV; pR) der höhere ist.

10. Steuerventil (12) nach einem der Ansprüche 3 bis 9 in Verbindung mit Ansprüchen 3 und 6, **dadurch gekennzeichnet, dass** ein Flächenverhältnis (F) zwischen der ersten Wandung (17a) und der dritten Wandung (17c) zwischen 1:2 und 2:1 beträgt.

11. Steuerventil (12) nach einem der Ansprüche 2 bis 10, **dadurch gekennzeichnet, dass** als Steuermittel weiterhin ein durch eine Druckfeder (23) vorgespannter, axial beweglicher Ventilkörper (22) vorgesehen ist, wobei der Steuerausgang (12c) je nach axialer Verstellung des Ventilkörpers (22) entweder über einen Druckraum (16) mit einem Entlüftungsanschluss (12e) für das Reduzieren des Federspeicher-Bremsdruckes (p3b) oder mit einem Versorgungsanschluss (12d) für das Erhöhen des Federspeicher-Bremsdruckes (p3b) verbindbar ist, wobei der zweite Steuerkolben (15b) in Abhängigkeit des Parkbrems-Steuerdruckes (p5) und/oder des Betriebsbrems-Steuerdruckes (pV; pR) den Ventilkörper (22) axial verstellen kann.

12. Elektronisch steuerbares Bremssystem (1) mit Vorderachs-Radbremsen (2), Hinterachs-Radbremsen (3) mit einem Federspeicherteil (3b) und einem Membranteil (3c), einem elektropneumatisch steuerbaren Vorderachs-Druckmodulator (6) zur Ausgabe eines Vorderachs-Bremsdruckes (p2) an die Vorderachs-Radbremsen (2), einem elektronisch steuerbaren Hinterachs-Druckmodulator (11) zur Ausgabe eines Membran-Bremsdruckes (p3c) an die Membranteile (3c) der Hinterachs-Radbremsen (3), einem Zentralmodul (7), einem elektropneumatischen Betriebsbremsventil (4),
wobei das Betriebsbremsventil (4) ausgebildet ist, in Abhängigkeit einer Betriebsbrems-Bremsvorgabe (VB) ein elektrisches Betriebsbrems-Betätigungssignal (S4) an das Zentralmodul (7) auszugeben,
wobei das Zentralmodul (7) signalleitend mit dem Vorderachs-Druckmodulator (6) und dem Hinterachs-Druckmodulator (11) verbunden ist zum Übertragen von dem Betriebsbrems-Betätigungssignal (S4) abhängigen Steuersignalen (S2, S3) an die Druckmodulatoren (6, 11), wobei das Betriebsbremsventil (4) weiterhin ausgebildet ist, in Abhängigkeit der Betriebsbrems-Bremsvorgabe (VB) einen pneumatischen Betriebsbrems-Steuerdruck (pV; pR) auszugeben, wobei der Vorderachs-Druckmodulator (6) im Redundanzfall über einen Redundanz-Anschluss (6a) mit einem Vorderachs-Betriebsbrems-Steuerdruck (pV) ansteuerbar ist,
wobei das Bremssystem (1) weiterhin ein Parkbremsventil (5) aufweist und das Parkbremsventil (5) in Abhängigkeit einer Parkbrems-Bremsvorgabe (VP) einen Parkbrems-Steuerdruck (p5) an einen zweiten Steuereingang (12b) eines Steuerventils (12) ausgibt, wobei das Steuerventil (12) in Abhängigkeit des Parkbrems-Steuerdruckes (p5) einen Federspeicher-Bremsdruck (p3b) erzeugt und über einen Steuerausgang (12c) an die Federspeicherteile (3b) der Hinterachs-Radbremsen (3) ausgibt,
**dadurch gekennzeichnet, dass**
das Steuerventil (12) zur Erzeugung des Federspeicher-Bremsdruckes (p3b) ein Steuerventil (12) nach einem der vorhergehenden Ansprüche ist, wobei das Betriebsbremsventil (4) pneumatisch mit einem ersten Steuereingang (12a) des Steuerventils (12) verbunden ist zum Übertragen des Betriebsbrems-Steuerdruckes (pV; pR) an das Steuerventil (12) und zur Ausgabe eines Federspeicher-Bremsdruckes (p3b) in Abhängigkeit des Parkbrems-Steuerdruckes (p5) und/oder des Betriebsbrems-Steuerdruckes (pV; pR).

13. Elektronisch steuerbares Bremssystem (1) nach Anspruch 12, **dadurch gekennzeichnet, dass** das Zentralmodul (7) signalleitend mit dem Steuerventil (12) verbunden ist zum Übermitteln eines Umschaltsignals (S1) zum wahlweisen Verbinden des ersten Steueranschlusses (12a) des Steuerventils (12) mit dem ersten Steuerraum (14a) oder der Atmosphäre (A) mit dem ersten Steuerraum (14a), wobei im Normalbetrieb ohne Vorliegen eines Defektes oder eines Ausfalls bei der elektrischen Ansteuerung des Hinterachs-Druckmodulators (11) über das Umschaltsignal (S1) vorgebbar ist, dass die Atmosphäre (A) mit dem ersten Steuerraum (14a) verbunden ist und sonst der erste Steueranschluss (12a) des Steuerventils (12) mit dem ersten Steuerraum (14a) verbunden ist.

14. Elektronisch steuerbares Bremssystem (1) nach Anspruch 12 oder 13, **dadurch gekennzeichnet, dass** das Betriebsbremsventil (4) einkanalig ausgeführt ist und der dem Vorderachs-Druckmodulator (6) vom Betriebsbremsventil (4) zugeführte Vorderachs-Steuerdruck (pV) über eine Abzweigung (13) auch dem ersten Steueranschluss (12a) des Steuerventils (12) zuführbar ist.

15. Elektronisch steuerbares Bremssystem (1) nach Anspruch 12 oder 13, **dadurch gekennzeichnet, dass** das Betriebsbremsventil (4) zweikanalig ausgeführt ist, wobei ein erster Kanal (K1) mit dem Redundanz-Anschluss (6a) des Vorderachs-Druckmodulators (6) verbunden ist zur pneumatischen Ansteuerung des Vorderachs-Druckmodulators (6) mit dem Vorderachs-Betriebsbrems-Steuerdruckes (pV) und ein zweiter Kanal (K2) mit dem ersten Steueranschluss (12a) des Steuerventils (12) verbunden ist zur Übertragung eines im Betriebsbremsventil (4) erzeugten pneumatischen Betriebsbrems-Steuerdruckes (pR) an das Steuerventil (12).

16. Verfahren zum Steuern eines elektrisch steuerbaren Bremssystems (1) nach einem der Ansprüche 12 bis 15, wobei der erste Steuereingang (12a) des Steuerventils (12) bei Feststellen eines elektrischen Defektes oder eines Ausfalls bei der elektrischen Ansteuerung der Hinterachs-Radbremsen (3) durch den Membranteil (3c) (St0) mit dem ersten Steuerraum (14a) verbunden wird, so dass ein vom Betriebsbrems-Steuerdruck (pV; pR) abhängiger Federspeicher-Bremsdruck (p3b) an die Federspeicherteile (3b) der Hinterachs-Radbremsen (3) ausgesteuert werden kann (St1a).

17. Verfahren nach Anspruch 16, **dadurch gekennzeichnet, dass** das Zentralmodul (7) dem Steuerventil (12) im Normalbetrieb ohne Feststellen eines elektrischen Defektes oder eines Ausfalls bei der elektrischen Ansteuerung der Hinterachs-Radbremsen (3) durch den Membranteil (3c) (St0) über das Umschaltsignal (S1) vorgibt, dass der erste Steuerraum (14a) mit der Atmosphäre (A) verbunden wird (St1a).

## Claims

1. A control valve (12) for controlling a spring accumulator brake pressure (p3b) on spring accumulator parts (3b) of a rear axle wheel brake (3), wherein the control valve (12) can be pneumatically controlled via a second control input (12b) with a parking brake control pressure (p5), wherein the parking brake control pressure (p5) can act on control means (14b, 15b, 17c, 22, 23, 24) arranged in a valve housing (12f) of the control valve (12) such that a spring accumulator brake pressure (p3b) at a control output (12c) of the control valve (12) is adjusted in order to generate a parking brake braking specification (VP) with the spring accumulator parts (3b) of the rear axle wheel brakes (3) according to the parking brake control pressure (p5),
wherein
the control valve (12) further comprises a first control connection (12a) for controlling the control valve (12) with an operating brake control pressure (pV; pR) dependent on an operating brake braking specification (VB), wherein the first control connection (12a) can be connected to an adjustable first control chamber (14a), wherein the first control chamber (14a) is actively connected to the control means (14b, 15b, 17c, 22, 23, 24) arranged in the control valve (12) such that the spring accumulator brake pressure (p3b) on the control output (12c) can be adjusted in the event of an adjustment of the first control chamber (14a) as a consequence of an application of the operating brake control pressure (pV; pR) depending on the operating brake control pressure (pV; pR) and/or on the parking brake control pressure (p5), **characterized in that** the control valve (12) comprises a control device (20), wherein the control device (20) can switch a third control piston (15c) such that the first control connection (12a) is connected to the adjustable first control chamber (14a) via a connection channel (19) for conducting the operating brake control pressure (pV; pR) into the first control chamber (14a) or that the atmosphere (A) is connected to the first control chamber (14a) to vent the first control chamber (14a).

2. The control valve (12) according to claim 1, **characterized in that** the control means are configured by an adjustable second control chamber (14b) as well as by an adjustable second control piston (15b), wherein the parking brake control pressure (p5) can be admitted into the second control chamber (14b) via the second control input (12b) and the second control piston (15b) is adjustable in a first direction (R1) or second direction (R2) opposite to the first direction (R1) by an acting of the parking brake control pressure (p5) on the second control piston (15b).

3. The control valve (12) according to claim 2, **characterized in that** the second control chamber (14b) is limited by a third wall (17c) arranged on the adjustable second control piston (15b), wherein the third wall (17c) is moveable vis-à-vis the valve hosing (12f) such that the second control piston (15b) can be adjusted by an acting of the parking brake control pressure (p5) on the third wall (17c).

4. The control valve (12) according to any of claims 2 or 3, **characterized in that** the first control chamber (14a) is actively connected with a first control piston (15a), wherein the first control piston (15a) is actively connected to the second control piston (15b) such that the second control piston (15b) is carried along by means of an adjustment of the first control piston (15a).

5. The control valve (12) according to claim 4, **characterized in that** the first control piston (15a) and the second control piston (15b) are rigidly connected to each other.

6. The control valve (12) according to claim 4 or 5, **characterized in that** the first control chamber (14a) is limited by a first wall (17a) moveable vis-à-vis a valve housing (12f) as well as a second wall (17b) fixed on the valve housing (12f), wherein the first control piston (15a) is connected to the first wall (17a) such that the first control piston (15a) and the second control piston (15b) actively connected to it are pushed in a first direction (R1) by a pressure increase in the first control chamber (14a).

7. The control valve (12) according to any of claims 4 to 6, **characterized in that** the second control chamber (14b) is arranged relative to the first control chamber (14a) such that the second control piston (15b) and the first control piston (15a) actively connected to it are pushed in the second direction (R2) in the event of a pressure increase in the second control chamber (14b).

8. The control valve (12) according to claim 7 in combination with claim 6, **characterized in that** the second control chamber (14b) is likewise limited by the second wall (17b) fixed on the valve housing (12f), wherein in the event of a pressure increase in the second control chamber (14b) the second control piston (15b) is pushed away from the second wall (17b) in the second direction (R2) and in the event of a pressure increase in the first control chamber (14a) the first control piston (15a) is pushed away from the second wall (17b) in the first direction (R1).

9. The control valve (12) according to any of claims 2 to 8 in combination with claim 4, **characterized in that** the first control chamber (14a) and the second control chamber (14b) interact with each other via the control pistons (15a, 15b) such that a spring accumulator brake pressure (p3b) is adjusted at the control output (12c) which is dependent on the parking brake control pressure (p5) prevailing in the second control chamber (14b) or the operating brake control pressure (pV; pR) prevailing in the first control chamber (14a), depending on which of the two control pressures (p5, pV; pR) is higher.

10. The control valve (12) according to any of claims 3 to 9 in combination with claims 3 and 6, **characterized in that** an area ratio (F) between the first wall (17a) and the third wall (17c) ranges between 1:2 and 2:1.

11. The control valve (12) according to any of claims 2 to 10, **characterized in that** an axial moveable valve body (22) is further provided as control means prestressed by a compression spring (23), wherein, depending on the axial adjustment of the valve body (22), the control output (12c) can be connected to a venting connection (12e) via a pressure chamber (16) for reducing the spring accumulator brake pressure (p3b) or to a supply connection (12d) for increasing the spring accumulator brake pressure (p3b), wherein the second control piston (15b) can axially adjust the valve body (22) as a function of the parking brake control pressure (p5) and/or the operating brake control pressure (pV; pR).

12. An electronically controllable braking system (1) having front axle wheel brakes (2), rear axle wheel brakes (3) with a spring accumulator part (3b) and a diaphragm part (3c), an electro-pneumatically controllable front axle pressure modulator (6) for outputting a front axle brake pressure (p2) to the front axle wheel brakes (2), an electronically controllable rear axle pressure modulator (11) for outputting a diaphragm brake pressure (p3c) to the diaphragm parts (3c) of the rear axle wheel brakes (3), a central module (7), an electropneumatic operating brake valve (4),
wherein, depending on an operating brake braking specification (VB), the operating brake valve (4) is configured to output an electrical operating brake actuation signal (S4) to the central module (7),
wherein the central module (7) is connected in a signal conducting manner to the front axle pressure modulator (6) and the rear axle pressure modulator (11) to transmit control signals (S2, S3) dependent on the operating brake actuation signal (S4) to the pressure modulators (6, 11),
wherein, depending on the operating brake braking specification (VB), the operating brake valve (4) is further configured to output a pneumatic operating brake control pressure (pV; pR), wherein in the case of redundancy the front axle pressure modulator (6) can be controlled via a redundancy connection (6a) having a front axle operating brake control pressure (pV),
wherein the braking system (1) further comprises a parking brake valve (5) and, depending on a parking brake braking specification (VP), the parking brake valve (5) outputs a parking brake control pressure (p5) to a second control input (12b) of a control valve (12), wherein, depending on parking brake control pressure (p5), the control valve (12) generates a spring accumulator brake pressure (p3b) and outputs it to the spring accumulator parts (3b) of the rear axle wheel brakes (3) via a control output (12c),
**characterized in that** the control valve (12) for generating the spring accumulator brake pressure (p3b) is a control valve (12) according to any of the foregoing claims, wherein the operating brake valve (4) is pneumatically connected to a first control input (12a) of the control valve (12) for transmitting the operating brake control pressure (pV; pR) to the control valve (12) and to output a spring accumulator brake pressure (p3b) depending on the parking brake control pressure (p5) and/or on the operating brake control pressure (pV; pR).

13. An electronically controllable braking system (1) according to claim 12, **characterized in that** the central module (7) is connected in a signal conducting manner to the control valve (12) for transmitting a switching signal (S1) for optional connection of the first control connection (12a) of the control valve (12) to the first control chamber (14a) or the atmosphere (A) to the first control chamber (14a), wherein in normal operation without the presence of a defect or a failure in the electrical control of the rear axle pressure modulator (11) it can be specified via the switching signal (S1) that the atmosphere (A) is connected to the first control chamber (14a) and otherwise the first control connection (12a) of the control valve (12) is connected to the first control chamber (14a).

14. An electronically controllable braking system (1) according to claim 12 or 13, **characterized in that** the operating brake valve (4) is designed to have a single channel and the front axle control pressure (pV) supplied to the front axle pressure modulator (6) by the operating brake valve (4) via a branch (13) can also be supplied to the first control connection (12a) of the control valve (12).

15. An electronically controllable braking system (1) according to claim 12 or 13, **characterized in that characterized in that** the operating brake valve (4) is designed to have two channels, wherein a first channel (K1) is connected to the redundancy connection (6a) of the front axle pressure modulator (6) for pneumatic control of the front axle pressure modulator (6) with the front axle operating brake control pressure (pV) and a second channel (K2) is connected to the first control connection (12a) of the control valve (12) for transmitting a pneumatic operating brake control pressure (pR) generated in the operating brake valve (4) to the control valve (12).

16. A method for controlling an electrically controllable braking system (1) according to any of claims 12 to 15, wherein, in the event of the detection of an electrical defect or a failure in the electrical control of the rear axle wheel brakes (3) the first control input (12a) of the control valve (12) is connected to the first control chamber (14a) by the diaphragm part (3c) (St0), so that a spring accumulator brake pressure (p3b) dependent on the operating brake control pressure (pV; pR) can be applied to the spring accumulator parts (3b) of the rear axle wheel brakes (3) (St1a).

17. The method according to claim 16, **characterized in that**, in normal operation without detection of an electrical defect or a failure in the electrical control of the rear axle wheel brakes (3) specified by the diaphragm part (3c) (St0) via the switching signal (S1) the central module (7) specifies to the control valve (12) that the first control chamber (14a) is connected to the atmosphere (A) (St1a).

## Revendications

1. Valve de commande (12) pour le pilotage d'une pression de freinage d'accumulateur élastique (p3b) au niveau de pièces d'accumulateur élastique (3b) d'un frein de roue d'essieu arrière (3), dans laquelle la valve de commande (12) peut être pilotée de façon pneumatique via une seconde entrée de commande (12b) avec une pression de commande de frein de stationnement (p5), dans laquelle la pression de commande de frein de stationnement (p5) peut agir sur des moyens de commande (14b, 15b, 17c, 22, 23, 24) agencés dans un logement de valve (12f) de la valve de commande (12) de sorte qu'une pression de freinage d'accumulateur élastique (p3b) se règle au niveau d'une sortie de commande (12c) de la valve de commande (12) en fonction de la pression de commande de frein de stationnement (p5) pour produire un objectif de freinage de frein de stationnement (VP) avec les pièces d'accumulateur élastique (3b) des freins de roue d'essieu arrière (3),
dans laquelle
la valve de commande (12) présente en outre un premier raccord de commande (12a) pour le pilotage de la valve de commande (12) avec une pression de commande de frein de service (pV ; pR) fonction d'un objectif de freinage de frein de service (VB), dans laquelle le premier raccord de commande (12a) peut être relié à un premier compartiment de commande (14a) réglable, dans laquelle le premier compartiment de commande (14a) se trouve en liaison fonctionnelle avec les moyens de commande (14b, 15b, 17c, 22, 23, 24) agencés dans la valve de commande (12) de sorte que la pression de freinage d'accumulateur élastique (p3b) au niveau de la sortie de commande (12c) puisse être réglée lors d'un correction du premier compartiment de commande (14a) à la suite d'une mise sous pression avec la pression de commande de frein de service (pV ; pR) en fonction de la pression de commande de frein de service (pV ; pR) et/ou de la pression de commande de frein de stationnement (p5), **caractérisée en ce que** la valve de commande (12) présente un équipement de commande (20), dans laquelle l'équipement de commande (20) peut faire commuter un troisième piston de commande (15c) de sorte que le premier raccord de commande (12a) soit relié au premier compartiment de commande (14a) réglable via un canal de liaison (19) pour faire passer la pression de commande de frein de service (pV ; pR) jusque dans le premier compartiment de commande (14a) ou que l'atmosphère (A) soit reliée au premier compartiment de commande (14a) pour purger le premier compartiment de commande (14a).

2. Valve de commande (12) selon la revendication 1, **caractérisée en ce que** les moyens de commande sont constitués par un second compartiment de commande (14b) réglable ainsi qu'un deuxième piston de commande (15b) réglable, dans laquelle la pression de commande de frein de stationnement (p5) peut être admise dans le second compartiment de commande (14b) via la seconde entrée de commande (12b) et le deuxième piston de commande (15b) peut être réglé dans une première direction (R1) ou une seconde direction (R2) orientée à l'encontre de la première direction (R1) par l'action de la pression de commande de frein de stationnement (p5) sur le deuxième piston de commande (15b).

3. Valve de commande (12) selon la revendication 2, **caractérisée en ce que** le second compartiment de commande (14b) est délimité par une troisième paroi (17c) agencée au niveau du deuxième piston de commande (15b) réglable, dans laquelle la troisième paroi (17c) est mobile par rapport au logement de valve (12f) de sorte que le deuxième piston de commande (15b) puisse être réglé par l'action de la pression de commande de frein de stationnement (p5) sur la troisième paroi (17c).

4. Valve de commande (12) selon l'une des revendication 2 ou 3, **caractérisée en ce que** le premier compartiment de commande (14a) se trouve en liaison fonctionnelle avec un premier piston de commande (15a), dans laquelle le premier piston de commande (15a) se trouve en liaison fonctionnelle avec le deuxième piston de commande (15b) de sorte que le deuxième piston de commande (15b) soit emporté par le réglage du premier piston de commande (15a).

5. Valve de commande (12) selon la revendication 4, **caractérisée en ce que** le premier piston de commande (15a) et le deuxième piston de commande (15b) sont solidement reliés l'un à l'autre.

6. Valve de commande (12) selon la revendication 4 ou 5, **caractérisée en ce que** le premier compartiment de commande (14a) est délimité par une première paroi (17a) mobile par rapport à un logement de valve (12f) ainsi que par une deuxième paroi (17b) fixée contre le logement de valve (12f), dans laquelle le premier piston de commande (15a) est relié à la première paroi (17a) de sorte que le premier piston de commande (15a) et le deuxième piston de commande (15b) qui se trouve en liaison fonctionnelle avec celui-ci soient poussés dans une première direction (R1) par une augmentation de pression dans le premier compartiment de commande (14a).

7. Valve de commande (12) selon l'une des revendications 4 à 6, **caractérisée en ce que** le second compartiment de commande (14b) est agencé par rapport au premier compartiment de commande (14a) de sorte que le deuxième piston de commande (15b) et le premier piston de commande (15a) qui se trouve en liaison fonctionnelle avec celui-ci soient poussés dans la seconde direction (R2) lors d'une augmentation de pression dans le second compartiment de commande (14b).

8. Valve de commande (12) selon la revendication 7 en lien avec la revendication 6, **caractérisée en ce que** le second compartiment de commande (14b) est également délimité par la deuxième paroi (17b) fixée contre le logement de valve (12f), dans laquelle le deuxième piston de commande (15b) est poussé en s'éloignant de la deuxième paroi (17b) dans la seconde direction (R2) lors d'une augmentation de pression dans le second compartiment de commande (14b) et le premier piston de commande (15a) est poussé en s'éloignant de la deuxième paroi (17b) dans la première direction (R1) lors d'une augmentation de pression dans le premier compartiment de commande (14a).

9. Valve de commande (12) selon l'une des revendications 2 à 8 en lien avec la revendication 4, **caractérisée en ce que** le premier compartiment de commande (14a) et le second compartiment de commande (14b) coopèrent ensemble via les pistons de commande (15a, 15b) de sorte qu'au niveau de la sortie de commande (12c) se règle une pression de freinage d'accumulateur élastique (p3b) fonction de la pression de commande de frein de stationnement (p5) qui prévaut dans le second compartiment de commande (14b) ou de la pression de commande de frein de service (pV ; pR) qui prévaut dans le premier compartiment de commande (14a), selon celle des deux pressions de commande (p5, pV ; pR) qui est la plus élevée.

10. Valve de commande (12) selon l'une des revendications 3 à 9 en lien avec les revendications 3 et 6, **caractérisée en ce qu'**un rapport de surface (F) entre la première paroi (17a) et la troisième paroi (17c) se situe entre 1:2 et 2:1.

11. Valve de commande (12) selon l'une des revendications 2 à 10, **caractérisée en ce qu'**un corps de valve (22) axialement mobile et précontraint par un ressort de pression (23) est en outre prévu en tant que moyen de commande, dans laquelle la sortie de commande (12c), selon la correction axiale du corps de valve (22), peut être reliée soit via une chambre de pression (16) avec un raccord de purge (12e) pour la réduction de la pression de freinage d'accumulateur élastique (p3b) soit avec un raccord d'alimentation (12d) pour l'augmentation de la pression de freinage d'accumulateur élastique (p3b), dans laquelle le deuxième piston de commande (15b) peut axialement régler le corps de valve (22) en fonction de la pression de commande de frein de stationnement (p5) et/ou de la pression de commande de frein de service (pV ; pR).

12. Système de freinage (1) qui peut être commandé électroniquement avec des freins de roue d'essieu avant (2), des freins de roue d'essieu arrière (3) avec une pièce d'accumulateur élastique (3b) et une pièce de membrane (3c), un modulateur de pression d'essieu avant (6) qui peut être commandé de façon électropneumatique pour la fourniture d'une pression de freinage d'essieu avant (p2) aux freins de roue d'essieu avant (2), un modulateur de pression d'essieu arrière (11) qui peut être commandé électroniquement pour la fourniture d'une pression de freinage de membrane (p3c) aux pièces de membrane (3c) des freins de roue d'essieu arrière (3), un module central (7), une valve de frein de service (4) électropneumatique,
dans lequel la valve de frein de service (4) est conçue pour fournir au module central (7) un signal d'actionnement de frein de service (S4) électrique en fonction d'un objectif de freinage de frein de service (VB),
dans lequel le module central (7) est relié par conduction de signalisation au modulateur de pression d'essieu avant (6) et au modulateur de pression d'essieu arrière (11) pour la transmission aux modulateurs de pression (6, 11) de signaux de commande (S2, S3) fonction du signal d'actionnement de frein de service (S4),
dans lequel la valve de frein de service (4) est en outre conçue pour fournir une pression de commande de frein de service (pV ; pR) pneumatique en fonction de l'objectif de freinage de frein de service (VB), dans lequel le modulateur de pression d'essieu avant (6) peut être piloté avec une pression de commande de frein de service d'essieu avant (pV) via un raccord de redondance (6a) en cas de redondance,
dans lequel le système de freinage (1) présente en outre une valve de frein de stationnement (5) et la valve de frein de stationnement (5) fournit une pression de commande de frein de stationnement (p5) à une seconde entrée de commande (12b) d'une valve de commande (12) en fonction d'un objectif de freinage de frein de stationnement (VP), dans lequel la valve de commande (12) produit une pression de freinage d'accumulateur élastique (p3b) en fonction de la pression de commande de frein de stationnement (p5) et la fournit aux pièces d'accumulateur élastique (3b) des freins de roue d'essieu arrière (3) via une sortie de commande (12c),
**caractérisé en ce que**
la valve de commande (12) pour produire la pression de freinage d'accumulateur élastique (p3b) est une valve de commande (12) selon l'une des revendications précédentes, dans lequel la valve de frein de service (4) est reliée de façon pneumatique à une première entrée (12a) de la valve de commande (12) pour la transmission de la pression de commande de frein de service (pV ; pR) à la valve de commande (12) et la fourniture d'une pression de freinage d'accumulateur élastique (p3b) en fonction de la pression de commande de frein de stationnement (p5) et/ou de la pression de commande de frein de service (pV ; pR).

13. Système de freinage (1) qui peut être commandé électroniquement selon la revendication 12, **caractérisé en ce que** le module central (7) est relié à la valve de commande (12) par conduction de signalisation pour la transmission d'un signal de commutation (S1) en vue d'une liaison, au choix, du premier raccord de commande (12a) de la valve de commande (12) avec le premier compartiment de commande (14a) ou de l'atmosphère (A) avec le premier compartiment de commande (14a), dans lequel, en fonctionnement normal sans présence d'une panne ou d'une défaillance lors du pilotage électrique du modulateur de pression d'essieu arrière (11) via le signal de commutation (SI), il peut être prédéfini que l'atmosphère (A) est reliée au premier compartiment de commande (14a) et sinon le premier raccord de commande (12a) de la valve de commande (12) est relié au premier compartiment de commande (14a).

14. Système de freinage (1) qui peut être commandé électroniquement selon la revendication 12 ou 13, **caractérisé en ce que** la valve de frein de service (4) est configurée à un canal et la pression de commande d'essieu avant (pV) amenée au modulateur de pression d'essieu avant (6) depuis la valve de frein de service (4) peut également être amenée au premier raccord de commande (12a) de la valve de commande (12) via une dérivation (13).

15. Système de freinage (1) qui peut être commandé électroniquement selon la revendication 12 ou 13, **caractérisé en ce que** la valve de frein de service (4) est configurée à deux canaux, dans lequel un premier canal (K1) est relié au raccord de redondance (6a) du modulateur de pression d'essieu avant (6) pour le pilotage pneumatique du modulateur de pression d'essieu avant (6) avec la pression de commande de frein de service (pV) et un second canal (K2) est relié au premier raccord de commande (12a) de la valve de commande (12) pour la transmission d'une pression de commande de frein de service (pR) pneumatique produite dans la valve de frein de service (4) à la valve de commande (12).

16. Procédé de commande d'un système de freinage (1) qui peut être commandé électriquement selon l'une des revendications 12 à 15, dans lequel la première entrée de commande (12a) de la valve de commande (12) est relié au premier compartiment de commande (14a) lors du constat par la pièce de membrane (3c) d'une panne électrique ou d'une défaillance lors du pilotage électrique des freins de roue d'essieu arrière (3) (St0), de sorte qu'une pression de freinage d'accumulateur élastique (p3b) fonction de la pression de commande de frein de service (pV ; pR) puisse être pilotée au niveau des pièces d'accumulateur élastique (3b) des freins de roue d'essieu arrière (3) (St1a).

17. Procédé selon la revendication 16, **caractérisé en ce que** le module central (7), en fonctionnement normal sans constat par la pièce de membrane (3c)(St0) d'une panne électrique ou d'une défaillance lors du pilotage électrique des freins de roue d'essieu arrière (3), prédéfinit à l'intention de la valve de commande (12) et via le signal de commutation (S1) que le premier compartiment de commande (14a) se voit relié à l'atmosphère (A) (St1a).
